(19) **Europäisches Patentamt**

**European Patent Office**

**Office européen des brevets**

(11) **EP 0 738 751 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.[7]: **C08J 7/12**

(21) Anmeldenummer: **96105150.5**

(22) Anmeldetag: **30.03.1996**

(54) **Verfahren zur Konditionierung von Polyolefinoberflächen**

Process for conditioning polyolefin surfaces

Procédé pour conditionner les surfaces de polyoléfines

(84) Benannte Vertragsstaaten:
**BE DE ES FR GB IT**

(30) Priorität: **22.04.1995 DE 19514924**

(43) Veröffentlichungstag der Anmeldung:
**23.10.1996 Patentblatt 1996/43**

(73) Patentinhaber: **MESSER GRIESHEIM GMBH**
**60547 Frankfurt (DE)**

(72) Erfinder:
• **Eschwey, Manfred, Dr.**
  **40489 Düsseldorf (DE)**
• **Van Bonn, Rolf**
  **47269 Duisburg (DE)**
• **Böhm, Ludwig, Prof. Dr.**
  **65795 Hattersheim (DE)**
• **Kaps, Rainer, Dr.**
  **61381 Friedrichsdorf (DE)**
• **Raddatz, Eckard**
  **64584 Biebesheim (DE)**

(56) Entgegenhaltungen:
CH-A- 345 821          DE-A- 1 905 094
US-A- 4 264 750

• **DATABASE WPI Week 9250 Derwent**
  **Publications Ltd., London, GB; AN 92-412062**
  **XP002009096 & JP-A-04 309 532 (MATSUSHITA**
  **ELEC IND CO LTD)**

## Beschreibung

Die Erfindung betrifft ein Verfahren zur Konditionierung von organischen Substratoberflächen nach dem Oberbegriff des Patentanspruches 1.

Unter den anschließenden Behandlungsverfahren im Sinne der Erfindung ist vor allem die Oberflächenfluorierung von Polyolefinen, insbesondere die technische Anwendung der Gasphasenfluorierung bei der Sperrschichtbildung für Kunststoffkraftstoffbehälter aus Polyethylen hoher Dichte (HDPE) zu verstehen. Neben der Fluorierung ist auch die Chlorierung ein erfindungsgemäß geeignetes anschließendes Behandlungsverfahren.

Die Gasphasenfluorierung organischer Moleküle mit dem Ziel einer möglichst vollständigen Substitution sämtlicher Kohlenwasserstoffverbindungen durch Kohlenstofffluorbildungen ist nach dem heutigen Stand der Technik folgenden Limitierungen unterworfen:

Sie gelingt in der Regel nur unter sorgfältigster Einhaltung und Kontrolle der beiden wichtigsten Reaktionsparameter Fluorkonzentration und Reaktionszeit. Die u. U. dramatische Reaktion von Fluor mit organischen Substanzen muß einerseits unter Inkaufnahme sehr langer Reaktionszeiten durch möglichst niedrige Fluorkonzentrationen zu Beginn der Reaktion moderiert werden, um unerwünschte Abbau- und Zersetzungsreaktionen zu vermeiden; andererseits muß durch möglichst hohe Fluorkonzentrationen gegen Ende der Reaktion dafür Sorge getragen werden, daß die Reaktion möglichst vollständig verläuft. Die Betrachtung der Energieumsätze bei der Reaktion von Fluor mit organischen Substraten liefert eine einfache Erklärung für dieses Verhalten:

$$F_2 + RH \rightarrow RF + HF \; \Delta H = -430 \; kJ \; mol^{-1}$$

Die bei dieser Reaktion freigesetzte Energiemenge reicht aus, um eine C-C Bindung (350 - 370 kJ mol$^{-1}$) zu brechen. Durch eine starke Verdünnung des Fluors mit einem Inertgas sowie durch Kühlung der Reaktionspartner versucht man i. d. R. diesem Problem Herr zu werden. Jedoch werden mit zunehmendem Substitutionsgrad, d. h. mit Fortschreiten der Reaktion, die entstehenden Moleküle immer stabiler, so daß für die vollständige Substitution immer drastischere Reaktionsbedingungen gewählt werden müssen (Wegnahme der Kühlung, unverdünntes Fluor). Dies führt zu niedrigen Produktausbeuten und Selektivitäten.

Bei der technischen Anwendung der Gasphasenfluorierung, z. B. bei der Sperrschichtbildung für Kunststoffkraftbehälter aus Polyethylen hoher Dichte (HDPE), verzichtet man deshalb unter Beachtung wirtschaftlicher Aspekte auch bei einem hohen $F_2$-Überschuß ganz bewußt auf die vollständige

Fluorierung des Polymergrundgerüstes, d. h. man strebt einen Kompromiß an zwischen der Vermeidung einer Degradation des Moleküls bei gleichzeitig möglichst hohem Fluorsubstitutionsgrad. Die Reaktion läßt sich durch folgende Bruttogleichung (I) beschreiben:

$$-CH_2-CH_2-CH_2- + 3 \; F_2 \rightarrow -CH_2-CHF-CF_2- + 3HF$$

Allerdings ist für eine organische Verbindung ein entscheidender Eigenschaftssprung hinsichtlich ihrer thermischen und chemischen Beständigkeit nur erreichbar, wenn möglichst alle Kohlenstoffsubstituenten durch F-Atome ersetzt werden. Man vergleiche hierzu das Eigenschaftsspektrum von PE, PVDF und PTFE gemäß

Tabelle I:

| Ausgewählte physikalische und chemische Eigenschaften von HDPE, ETFE* und PTFE: | | | | |
|---|---|---|---|---|
| Polymer/ Eigensch. | HDPE | ETFE | PTFE | Einh |
| Schmelzber. | ~130 | ~270 | ~340 | °C |
| Temperaturber. der Anwendung | < 80 | <150 | <260 | °C |
| Dichte | ~0,94 | ~1,75 | 2,2 | g/cm$^3$ |
| Oxydationsbeständigkeit | mäßig | gut | ausgezeichnet | |
| Sauerstoffpermeabilität | 76 | 67 | 250 | $\frac{cm^3}{m^2 d \, bar}$ |
| Methanpermeabilität | 56 | -- | 1,47 | $\frac{cm^3}{m^2 d \, bar}$ |
| Wasserdampfpermeabilität | 1 | 0,11 | 0,03 | g/m$^2$d |

*Teilfluorierter Thermoplast (Tetrafluorethylen - Ethylen Mischpolymerisat)

Die Derwent Zusammenfassung AN 92-412062 der JP-A-4309532 beschreibt ein Verfahren zur Oberflächenbehandlung von teilfluoriertem Polymer (PFE; Tetrafluorethylen / perfluoralkylvinylether Copolymer) mit einer Sauerstoffplasma-Behandlung in einem ersten Schritt, einer Wasserstoffplasma-Behandlung in einem zweiten Schritt und einer Behandlung mit einem Plasma eines fluorhaltigen Gases in einem dritten Schritt. Der zweite Schritt ist notwendig für eine vollständige Fluorierung in dem dritten Schritt.

Der Erfindung liegt die Aufgabe zugrunde, ein Verfahren zur Konditionierung von organischen Substratoberflächen zu schaffen, welches unter Vermeidung oxidativer Abbau - und Fragmentierungsreaktionen die Voraussetzungen für die Durchführung anschließender Behandlungsverfahren verbessert. Insbesondere sollen hierdurch die Voraussetzungen für die wirtschaftliche Durchführung, d. h. kurze Reaktionszeiten und niedrige Fluorkonzentrationen für einen quantitativen Verlauf der Fluorierungsreaktion gemäß Gleichung (II) sichergestellt werden.

$$-CH_2-CH_2-CH_2- + 6F_2 \rightarrow -CF_2-CF_2-CF_2- + 6\ HF(II)$$

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen. Vorteilhafte Weiterbildungen der Erfindung sind in den Unteransprüchen angegeben.

Überraschenderweise hat sich herausgestellt, daß sich eine glatte quantitative Umsetzung von elementarem Fluor mit einem Kohlenwasserstoff erreichen läßt, wenn der eigentlichen Fluorierung erfindungsgemäß ein Behandlungsschritt mit Wasserstoff oder einem wasserstoffhaltigen Gasgemisch vorgeschaltet wird, im folgenden Formierung genannt. Für den technisch wichtigen Bereich der Gasphasenfluorierung von Polyethylen (PE) bedeutet dies, daß die PE-Oberfläche in eine Polytetrafluorethylen (PTFE) analoge Struktur umgewandelt werden kann. Dies war unter wirtschaftlichen Reaktionsbedingungen bisher nicht möglich. Eine entsprechend behandelte, fluorierte Polyolefinoberfläche ist z. B. durch Wasser nicht benetzbar: Sie unterscheidet sich somit in prinzipieller Weise von bisher bekannten technisch genutzten Fluorierprozessen. Das erfindungsgemäße Verfahrensprinzip erlaubt die Aufbringung hydrophober Fluorpolymere auf technischen Halb- oder Fertigerzeugnissen aus Polyolefinen mit einem z. T. erheblich verbesserten chemischen und physikalischen Eigenschaftsprofil (siehe Tabelle I). In besonders vorteilhafter Weise können diese Behandlungsschritte im Zuge wichtiger Verarbeitungsschritte für die Kunststofformgebung (Extrudieren, Spritzgießen, Blasformen u.s.w.) durchgeführt werden.

Überraschenderweise stellt sich bereits bei Raumtemperatur durch Formierung der Substratoberfläche mit Wasserstoff eine deutliche Erhöhung der C-F Ausbeute bei ansonsten gleichbleibenden Reaktionsbedingungen ein. Dies geht einher mit einem deutlich verbesserten Permeationsverhalten gegenüber Kraftstoffen und deren Zusätzen.

Ein analoges Verhalten der Polyolefinoberfläche ergibt sich bei der Reaktion mit elementarem Chlor: Während auf der nicht formierten Polyolefinoberfläche nach der Behandlung mit Chlor praktisch keine Substitution von C-H-Bindungen durch C-Cl-Bindungen zu erkennen ist, wird durch die erfindungsgemäß vorgeschaltete Formierung ein signifikanter Anstieg der C-C1 Bindungsanteile beobachtbar. Dies ist umso mehr überraschend, als normalerweise die Chlorierung von KW-Stoffen eine beträchtlich höhere Aktivierungsenergie als die Fluorierung voraussetzt. Durch den Formierschritt wird die Aktivierungsenergie für diese Reaktion offenbar soweit herabgesetzt, daß die Reaktion unter wirtschaftlichen Reaktionsbedingungen durchgeführt werden kann (siehe Tabelle II).

## Tabelle II

| Nr | Polymer | Formierung | | | | Fluorierung | | | | Belegung [µg/cm²] | C-F Verhältnis |
|---|---|---|---|---|---|---|---|---|---|---|---|
| | | p [bar] | c [Vol-%] | t [sec] | T [°C] | p [bar] | c [Vol-%] | t [sec] | T [°C] | | |
| 1 | HDPE | - | - | - | - | - | - | - | - | - | - |
| 2 | HDPE | 8 | 12 | 60 | 195 | - | - | - | - | - | - |
| 3 | HDPE | - | - | - | - | 8 | 1 | 30 | 125 | 25 | 1 |
| 4 | HDPE | 8 | 12 | 60 | 195 | 8 | 1 | 30 | 125 | 87 | 1,9 |
| 5 | HDPE | 8 | 0,5 | 60 | 195 | 8 | 1 | 30 | 125 | 73 | 1,7 |
| 6 | HDPE | - | - | - | - | 0,9 | 10 | 600 | 50 | 27 | 1 |
| 7 | HDPE | 0,9 | 12 | 900 | 27 | 0,9 | 10 | 600 | 50 | 91 | 1,9 |
| | | | | | | Chlorierung | | | | | |
| 8 | HDPE | | | | | 2 | 100 | 30 | 100 | | |
| 9 | HDPE | 8 | 12 | 60 | 195 | 2 | 100 | 30 | 100 | | |

Die Formierung bewirkt, auch ohne nachgeschaltete Behandlung der Polymeroberfläche, eine deutlich verbesserte Stabilität des Substrats gegenüber einem oxidativen Abbau, wie er insbesondere bei der Verarbeitung technischer Thermoplaste durch den Einfluß des Luftsauerstoffs praktisch unvermeidbar ist. Hierdurch wird einerseits im Anschluß daran eine praktisch nicht vorgeschädigte Oberfläche durch eine Gasphasenreaktion modifiziert, andererseits werden dadurch höhere Verarbeitungstemperaturen bei der Herstellung technischer Formteile ermöglicht, was sich wiederum günstig auf die erreichbaren Zykluszeiten und damit auf die Wirtschaftlichkeit auswirkt.

Die Erfindung wird durch die nachfolgenden Beispiele veranschaulicht:

**Beispiele:**

Kleinhohlkörper aus Polyolefinen werden in einem Autoklaven unter definierten Reaktionsbedingungen mit den entsprechenden Gasen bzw. Gasgemischen behandelt (siehe Tabelle II).

Die behandelten Behälter wurden anschließend IR-spektroskopisch mittels abgeschwächter Totalreflektion (ATR), mit Hilfe von ESCA (Elektron Spectroscopy for Chemical Analysis) und mittels Elementaranalyse (F-Oberflächenbelegung) charakterisiert.

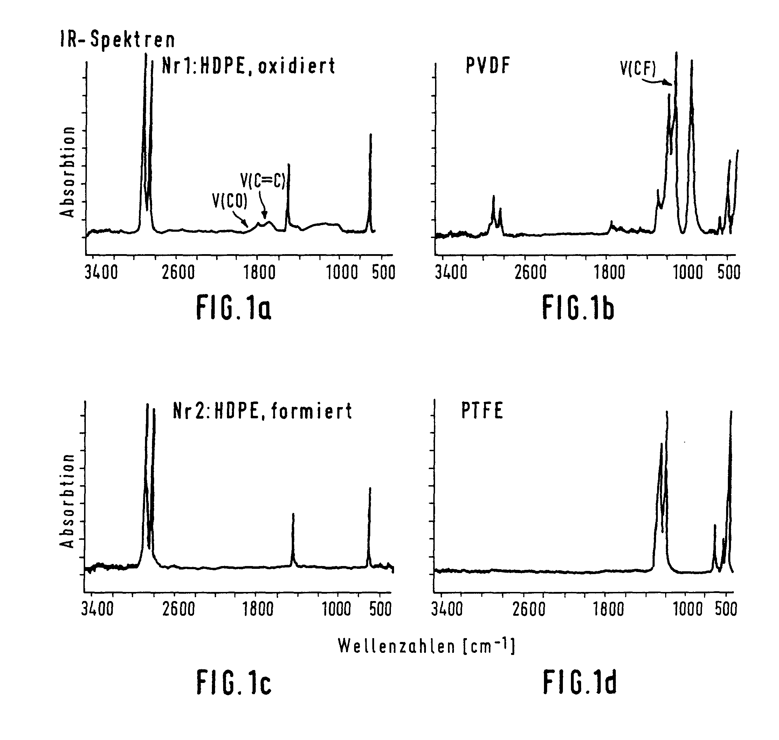

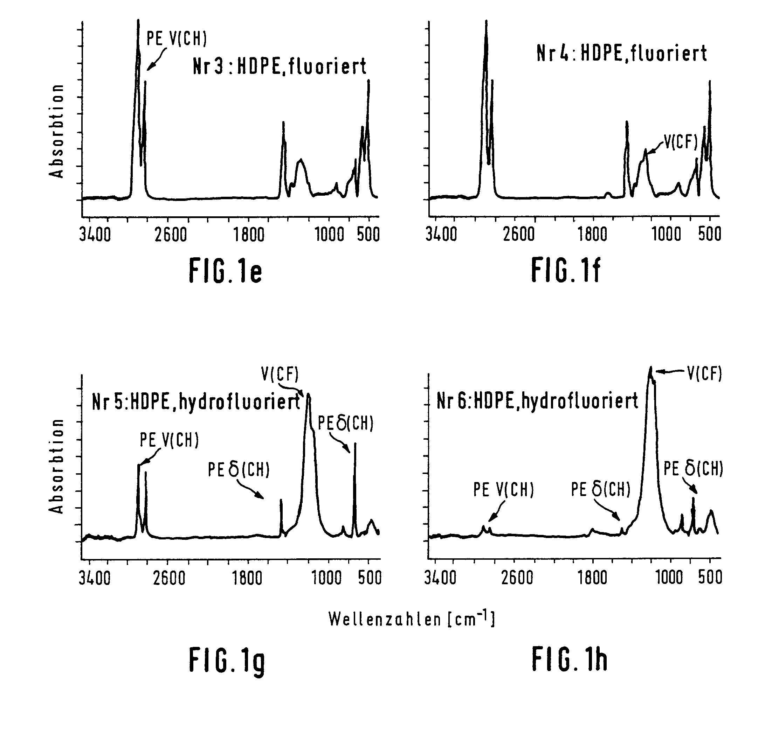

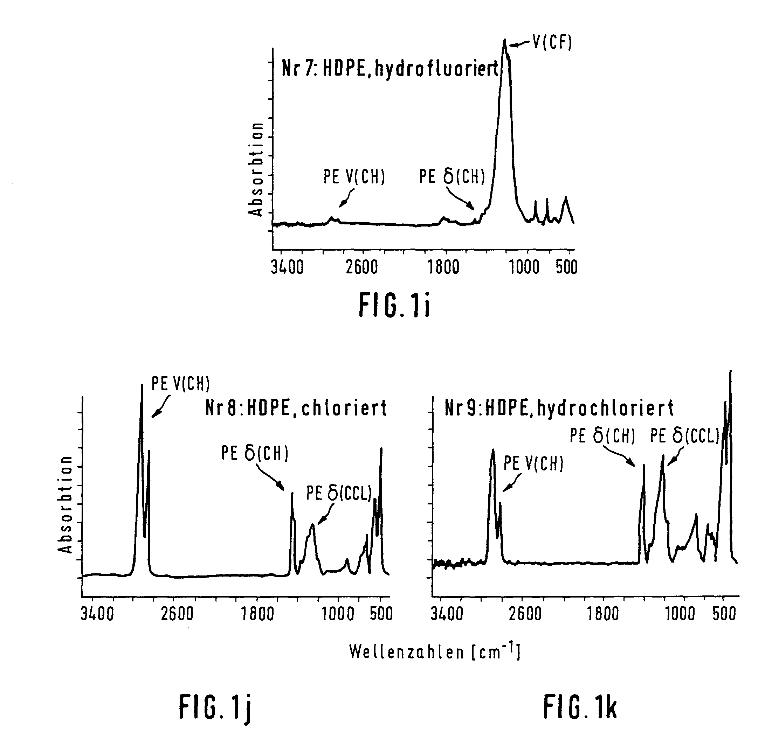

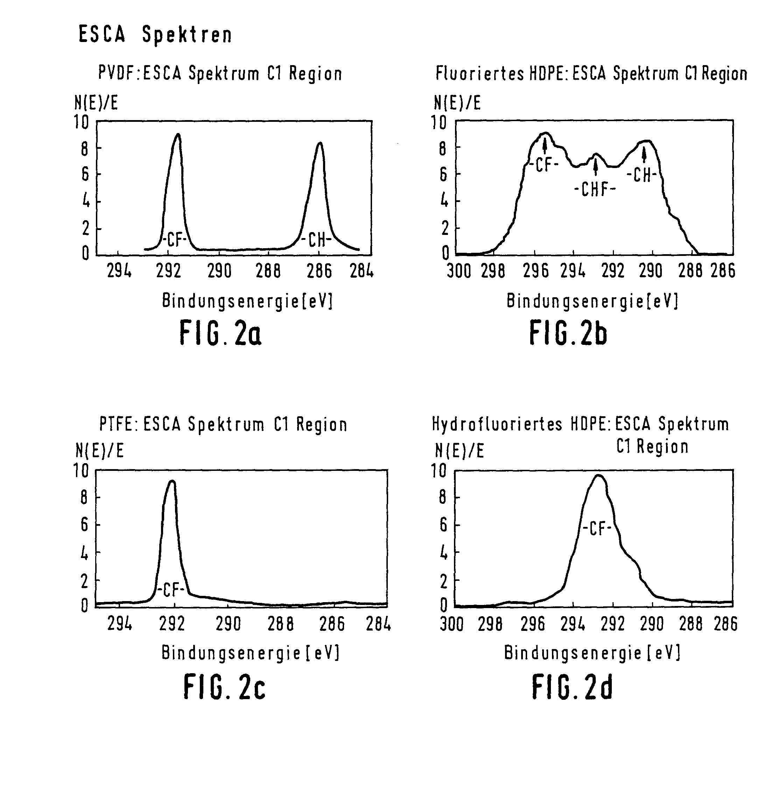

Die deutliche Abnahme bzw. das "Verschwinden" der C-H Bande (CH-Streckschwingung bei ca. 3000 cm$^{-1}$ im IR-Spektrum (Fig. 1) bei gleichzeitiger Zunahme der Intensität der C-F- Bande bei ca. 1200 cm$^{-1}$ beweist eindrucksvoll die erzielte chemische Umwandlung und den damit verknüpften Eigenschaftssprung gemäß Tabelle I. Gleichzeitig wird auch das ESCA Spektrum (Fig. 2) immer "PTFE ähnlicher". Die formierte Polymeroberfläche (ohne Nachbehandlung) zeichnet sich im IR-Spektrum durch die Abwesenheit von C=O und C=C Absorbtionsbanden bei ca. 1750 cm$^{-1}$ aus, die signifikant sind für einen oxidativen Abbau des Polymergrundgerüstes.

**Patentansprüche**

1.   Verfahren zur Konditionierung von Polyolefinoberflächen zur Verbesserung daran auschließender Fluorierungs- oder Chlorierumgsverfahren, **dadurch gekennzeichnet, daß** die Polyolefinoberfläche bei Temperaturen zwischen 25 °C und 300 °C mit Wasserstoff oder einem mindestens 0,1 Volumenprozent Wasserstoff enthaltenden Gasgemisch beaufschlagt wird und keine Plasma-Behandlung erfolgt.

2.   Verfahren nach Anspruch 1, **dadurch gekennzeichnet, daß** die Beaufschlagung der Polymeroberfläche mit Wasserstoff im Rahmen der Verarbeitung von Kunststoffen zu Formteilen erfolgt.

3.   Verfahren nach Anspruch 2, **dadurch gekennzeichnet, daß** die Verarbeitung von Kunststoffen zu Formteilen durch Extrusion, Formblasen oder Spritzgießen erfolgt.

4.   Verfahren zur Erzeugung einer durch Wasser nicht benetzbaren fluorierten Polyolefinoberfläche von Polyolefinen durch Behandlung der Polyolefinoberfläche gemäß Anspruch 1 bis 3 und anschließender Gasphasenfluorierung.

**5.** Verfahren nach Anspruch 4, **dadurch gekennzeichnet, daß** Polyethylen als Polyolefin eingesetzt wird.


**Claims**

**1.** Process for conditioning polyolefin surfaces for improving subsequent fluorination or chlorination processes, **characterized in that** the polyolefin surface is exposed at temperatures between 25°C and 300°C to hydrogen or a gas mixture containing at least 0.1 per cent by volume of hydrogen, and no plasma treatment is carried out.

**2.** Process according to Claim 1, **characterized in that** the exposure of the polymer surface to hydrogen is carried out in the context of the processing of plastics to give mouldings.

**3.** Process according to Claim 2, **characterized in that** the processing of plastics to give mouldings is carried out by extrusion, blow moulding or injection moulding.

**4.** Process for producing a fluorinated surface of polyolefins, which is not able to be wetted by water, by treatment of the polyolefin surface according to Claims 1 to 3 and subsequent gasphase fluorination.

**5.** Process according to Claim 4, **characterized in that** the polyolefin used is polyethylene.


**Revendications**

**1.** Procédé de conditionnement des surfaces de polyoléfine aux fins d'amélioration des procédés de fluoration ou de chloration qui le suivent,
**caractérisé en ce qu'**
on soumet la surface de la polyoléfine à des températures comprises entre 25°C et 300°C avec de l'hydrogène ou un mélange gazeux contenant au moins 0,1 % en volume d'hydrogène, et qu'on ne procède pas à un traitement au plasma.

**2.** Procédé selon la revendication 1,
**caractérisé en ce que**
l'alimentation de la surface du polymère avec de l'hydrogène s'effectue dans le cadre de la transformation des matières plastiques en articles moulés.

**3.** Procédé selon la revendication 2,
**caractérisé en ce que**
la transformation des matières en articles moulés s'effectue par extrusion, soufflage dans un moule ou moulage par injection.

**4.** Procédé de production d'une surface de polyoléfine fluorée non mouillable par l'eau par traitement de la surface de polyoléfine selon l'une des revendications 1 à 3 puis par fluoration en phase gazeuse.

**5.** Procédé selon la revendication 4,
**caractérisé en ce qu'**
on utilise le polyéthylène comme polyoléfine.

IR-Spektren

FIG.1a

FIG.1b

FIG.1c

FIG.1d

FIG.1e

FIG.1f

FIG.1g

FIG.1h

FIG.1i

FIG.1j

FIG.1k

ESCA Spektren

PVDF: ESCA Spektrum C1 Region

Fluoriertes HDPE: ESCA Spektrum C1 Region

**FIG. 2a**

**FIG. 2b**

PTFE: ESCA Spektrum C1 Region

Hydrofluoriertes HDPE: ESCA Spektrum C1 Region

**FIG. 2c**

**FIG. 2d**